# EUROPEAN PATENT APPLICATION

(11) **EP 4 254 566 A1**
(43) Date of publication of application: **04.10.2023**
(21) Application number: 22850633.3
(22) Date of filing: 30.06.2022
(51) Int. Cl.: H01M 4/62, H01M 4/38

(54) **CARBON-COATED COMPOSITE MATERIAL, PREPARATION METHOD THEREFOR, AND USE THEREOF**

(30) Priority: 21.02.2022 CN 202210154223
(71) Applicant: Beijing Iametal New Energy Technology Co., Ltd, Beijing 100190 (CN)
(72) Inventor: LI, Jinyi, Beijing 100190 (CN); XU, Quan, Beijing 100190 (CN); LI, Ge, Beijing 100190 (CN); ZHAO, Anguang, Beijing 100190 (CN); SUN, Dongli, Beijing 100190 (CN); CHENG, Xiaoyan, Beijing 100190 (CN)
(74) Representative: Huang, Liwei
(86) International application number: PCT/CN2022/102629
(87) International publication number: WO 2023/155365

(57) **Abstract**

The present invention relates to a carbon coated composite including a core and a carbon coating layer coating the core, wherein the density of the carbon coating layer is 1.0 g·cm⁻³≤ρ₂≤2.0 g·cm⁻³; the dissolution amount of a core characteristic element of the carbon coated composite is 100 ppm or less; a material to be coated with carbon has a D50 of 1-40 µm, a particle size distribution span satisfies 0.5≤(D90-D10)/D50≤2, a specific surface area is 1-5 m²·g⁻¹, a ratio of the specific surface area to a bulk pore volume is 0.5-2 cm⁻¹ and the increase in D50 of the coated composite is 3µm or less. According to the carbon coated composite provided by the present invention, the core material can be coated with the carbon coating layer, and a shell of the carbon coated composite can mitigate the volume change of the core; and a complete and uniform carbon layer can effectively disperse surface charges to form a more stable electric double layer structure, forming a more uniform and stable interface during lithium intercalation, and thus favoring the improvement of the battery performance, in particular cycling stability.

## Description

### TECHNICAL FIELD

The present invention belongs to the field of preparation of carbon composites, and in particular relates to a dense and uniform carbon coated composite and a preparation method therefor and use thereof.

### BACKGROUND

Carbon coating is a common material modification method. Carbon coating of a material may improve the electrical conductivity of the material on one hand, and on the other hand provide a stable chemical and electrochemical reaction interface.

Currently, carbon coating typically employs a solid-phase method, a liquid-phase method, and a gas-phase method. In the prior art, carbon coating can be carried out by the solid-phase method, i.e., solid-solid mixing in which a solid carbon source is dispersed in a material to be coated, and then heated to a certain temperature, and the solid carbon source is softened and coats the surfaces of particles of the material to be coated, and can be dehydrogenated to carbon by further increasing the temperature. However, a solid-phase carbon coating process is unlikely to achieve coating uniformity and avoid the problem of particle agglomeration. The liquid-phase method and the gas-phase method may better avoid the problem of particle agglomeration. The liquid-phase method usually uses a solvent such as water, ethanol, and the like to disperse a solute in a liquid phase, followed by high temperature carbonization to obtain a carbon coated material. However, liquid-phase carbon coating involves solvent recovery and the process is relatively cumbersome and difficult to apply on a large scale. The gas-phase method is in particular a process in which carbon-containing gas coats the surface of the material to be coated by vapor deposition. With the development of equipment and processes, gas-phase coating has been successfully applied to new energy-related materials, and especially has good effects for materials with large volume deformation, which can improve the electrical conductivity, improve the interface and reduce volume expansion during lithium intercalation. Furthermore, gas-phase coating has the characteristics of less pollution and controllable coating amount. However, a coating layer obtained by gas-phase coating is unstable in completeness, which is easy to cause incomplete coating, and the coating layer is also unlikely to achieve the effect of proper compactness, which is easy to cause leakage or dissolution of the inner coating material, affecting the properties of the carbon coated composite. The gas-phase coating process involves the selection of carbon source process gas and the screening of key parameters of raw materials in which crucial indicators are: the number of surface defects of the raw materials, the optimization of the particle size, and different numbers of active sites caused by different powder bulk pore structures, and the collocation of the number of active sites and the process gas results in a complex competitive reaction of diffusion and growth nucleation during chemical vapor deposition. Therefore, a uniform and dense carbon layer remains a difficulty for the gas-phase coating process. The uniform and dense carbon layer can significantly enhance product recycling and storage properties, and especially can inhibit side reactions under high temperature conditions.

In a silicon negative electrode material, volume expansion is one of the biggest problems, although volume expansion can be reduced to some extent through the silicon oxide technology in the prior art, there are also problems of low electrical conductivity and low initial coulombic efficiency, and although carbon coating can effectively solve the problem of low electrical conductivity, it is necessary to ensure the compactness and completeness of a carbon-coated coating layer in order to effectively improve the electrical conductivity of a carbon-coated silicon negative electrode material.

Therefore, there is an urgent need to develop a carbon coated composite with higher compactness and high coating completeness in order to more completely coat a coated material with a carbon layer and maximize the performance of the carbon coated composite.

### SUMMARY

For the deficiencies in the prior art, one of the objects of the present application is to provide a carbon coated composite including a core and a carbon coating layer coating the core, wherein the carbon coating layer has a density of 1.0-2.0 g·cm-3, and a material to be coated with carbon has a D50 of 1-40 µm, preferably 3-10 µm, more preferably 4-7 µm; a particle size distribution span is 0.5≤(D90-D10)/D50≤2, preferably 1≤(D90-D10)/D50≤1.5; a specific surface area is 1-5 m2·g-1, preferably 1-2 m2·g-1; a ratio of the specific surface area to a bulk pore volume is 0.50-2.00 cm-1, preferably 0.70-1.50 cm-1; and the increase in D50 of the coated composite is 3µm or less, preferably 1µm or less.

The density of the carbon coating layer can be calculated by the following formula: ρ2=m2ρ1ρ3/(m1ρ3-m3ρ1), wherein ρ2 is the density of the carbon coating layer, and the carbon coated composite has a mass of m1 and a density of ρ1; the carbon coating layer has a mass of m2; the core has a mass m3 and a density of ρ3; the carbon coated composite is placed in an excess solution capable of dissolving a core characteristic element for dissolution determination of the core characteristic element, the dissolution amount of the core characteristic element being 100 ppm or less.

Preferably, the density of the carbon coating layer in the carbon coated composite is 1.2 g·cm-3<ρ2<1.5 g cm-3.

The carbon coated composite provided by the present application has a dense carbon coating layer with high density and a core element dissolution amount of 100ppm or below, in other words, the carbon coated composite provided by the present application has a complete carbon coating layer with appropriate compactness. Coating a complete carbon coated composite effectively avoids the defects of coating and can characterize the uniformity of coating the outer layer of the core with the carbon coating layer, and uniform coating of the carbon layer is critical to the stability of the properties of the carbon coated material and on one hand can mitigate the volume change (e.g., volume expansion) of the core material; in addition to this, a complete and uniform carbon layer can effectively disperse surface charges to form a more stable electric double layer structure, forming a more uniform and stable interface during lithium intercalation; whereas a suitable density of the carbon coating layer may characterize the compactness of the carbon coating layer, and 1.0 g·cm-3≤ρ2≤2.0 g cm-3 (1.1 g cm-3, 1.2 g·cm-3, 1.3 g·cm-3, 1.4 g·cm-3, 1.5 g·cm-3, 1.6 g·cm-3, 1.7 g·cm-3, 1.8 g·cm-3, 1.9 g·cm-3, etc.) enables the carbon coating layer to have proper compactness, forming a more stable electric double layer structure.

The core material of the carbon coated composite is not particularly limited in the present application, and preferably includes inorganic particles, such as any one or a combination of at least two of graphite particles, metallic tin particles, tin oxide particles, silicon particles, silicon oxide particles, silicon nitride particles, element-doped silicon-oxygen composite particles, metallic germanium particles, and germanium oxide particles.

The resulting carbon coated composite of the present invention is placed in an excess solution capable of dissolving the core characteristic element for dissolution determination of the core characteristic element, the dissolution amount of the core characteristic element being 100 ppm or less. The core characteristic element refers to an element of the core material of which quantitative data of inductively coupled plasma (ICP) is obtained by a chemical reaction, etc., and if the core itself cannot be dissolved, other soluble elements need to be selected as a reference. When the core is the graphite particles, the dissolution solution is aqua regia and the core characteristic element is an impurity trace element such as an iron element. When the core is the metallic tin particles or the tin oxide particles, the dissolution solution is aqua regia and the core characteristic elements is a tin element; when the core is the metallic germanium particles or the germanium oxide particles, the dissolution solution is an aqua regia solution and the core characteristic element is a germanium element; and when the core is the silicon particles, the silicon oxide particles, the silicon nitride particles or the element-doped silicon-oxygen composite particles, the core characteristic element is silicon, the dissolution solution is a sodium hydroxide or a hydrofluoric acid solution, and the dissolution time is 24h or more.

In the determination of the dissolution amount of the core characteristic element, the excess solution means that the amount of a solution added is more than the amount of a solution capable of completely dissolving the core characteristic element. Less dissolution of the core characteristic element indicates more dense and uniform carbon coating, complete coating of the core material is achieved without defects or weaknesses, and the complete coating structure is advantageous for reducing side reactions at the interface and is more helpful for improving the high temperature, low temperature, storage and cycling characteristics of a battery.

The carbon coated composite with a mass of m1 and a density ρ1 is taken, and if the carbon content of the carbon coated composite is A (the carbon coating content can be determined by a carbon sulfur meter for a composite without carbon in the core and the carbon coating content can be determined by TG-DSC for a composite with carbon in the core), then the carbon coating layer has a mass of m2=m1×A.

The density ρ1 of the carbon coated composite described in the present application and the density ρ3 of the core are both true densities of the corresponding substances, while the density ρ2 of the carbon coating layer defined in the present application should also be understood as a true density of the carbon coating layer. True density refers to an actual mass of a solid matter per unit volume of a material in an absolutely dense state, i.e. a density after removal of internal pores or voids between particles. True density is different from apparent density and bulk density, the apparent density refers to a ratio of a mass to an apparent volume of a material, and the apparent volume is a solid volume plus a closed pore volume, which does not take into account factors such as voids within the material; the bulk density is a mass per unit volume measured just after dust or powder is freely filled in a container, which also does not take into account the pores and voids formed by material accumulation. The density ρ1 of the carbon coated composite of the present invention and the density ρ3 of the core can be measured by using a true density tester. The average particle size, particle size distribution, specific surface area, and bulk pore volume can all be determined by the prior art, and an exemplary test method is a specific surface area test instrument.

A second object of the present invention is to provide a preparation method for the carbon coated composite described in one of the objects, the preparation method including the following steps of:
(1) treating a feedstock to be coated, i.e. a core material such that the core material has an average diameter of 1-40 µm, a particle size distribution span is 0.5≤(D90-D10)/D50≤2, a specific surface area is 1-5 m2·g-1, and a ratio of the specific surface area to a bulk pore volume is 0.5-2.0 cm-1;
(2) feeding the treated feedstock to be coated into a rotary kiln, introducing a carbon-containing process gas under a protective atmosphere, and performing first carbon element vapor deposition to obtain a first intermediate product;
(3) sieving the intermediate product to remove a material with a large particle size, and subjecting the remaining material to crushing deagglomeration to obtain a second intermediate product; and
(4) feeding the second intermediate product again into the rotary kiln, introducing a carbon-containing process gas under a protective atmosphere, and performing second carbon element vapor deposition to obtain a carbon coated composite with feedstock particles to be coated as a core and an outer layer coated with carbon;

Rotary revolution is performed in the rotary kiln, and twice vapor deposition is performed on the dynamic feedstock surface to form a complete carbon coating layer with the dissolution amount of the core characteristic element being less than 100 ppm. In the preparation method provided in the present application, the size range, the particle size span, the specific surface area and the bulk pore volume of the feedstock enable the feedstock to have suitable voids and suitable particle surface roughness, thereby making it easier to deposit a carbon layer on the particle surfaces and pore walls during chemical vapor deposition, a suitable degree of deagglomeration after the primary chemical vapor deposition is performed such that the particles reach a specific size (the average diameter of the second intermediate product is 1-1.1 times the average diameter of the feedstock to be coated), and coating defects due to agglomeration during the primary chemical vapor deposition are exposed, thereby completing repair of the coating defects during the secondary chemical vapor deposition.

A treatment process in the step (1) is well known in the art, such as jet milling, ball milling, a high-speed pulverizer, 4-grading, and the like. It should be noted that if the feedstock to be coated does not meet the requirements that "the average diameter is 1-40 µm, the particle size distribution span is 0.5≤(D90-D10)/D50≤2, the specific surface area is 1-5 m2·g-1, the ratio of the specific surface area to the bulk pore volume is 0.5-2.0 cm-1", those skilled in the art can treat the feedstock to be coated by the prior art such as crushing, grading, and the like to be within the requirements of this application for the feedstock to be coated, and then carbon coating is performed.

Preferably, the feedstock to be coated includes any one of graphite powder, metal tin, tin oxide, silicon, silicon oxide, silicon nitride, an element-doped silicon-oxygen composite, metallic germanium particles, and germanium oxide particles.

The silicon oxide exemplarily includes silicon oxide, silicon monoxide, or any silicon oxide with a silicon to oxygen ratio of 1:1 to 1:2; and the element-doped silicon-oxygen composite may exemplarily be lithium-doped silicon monoxide, magnesium-doped silicon monoxide, or the like.

The carbon coated composite of the present invention can be used as a negative electrode material for a lithium ion battery, and the effects of improving the electrical conductivity of the composite, alleviating the volume changes, and stabilizing the interface can be achieved; when a coated material is graphite, the composite has reduced lithium intercalation volume expansion, improved rate performance, and a stabilized interface; when the coated material is silicon monoxide, the composite can improve the electrical conductivity and solid electrolyte interface (SEI) film stability of the material, especially the dense carbon layer has a better effect in buffering volume changes, and the continuous dense carbon layer protection can improve high temperature performance and cycling performance.

The carbon-containing process gas in the step (2) includes C1-4 alkanes (such as methane, ethane and propane), C2-4 alkenes (such as ethylene, propylene, 1-butene, and 1,3-butadiene), and C2-4 alkynes (such as acetylene and propyne).

Preferably, during the first carbon element vapor deposition, the carbon-containing process gas is a compound of propylene and methane in a volume ratio of (1-2):(1-2), a flow rate at which the process gas is introduced satisfies the following condition: h=V/s, wherein V is the total volume of a chamber of the rotary kiln in L; s is a process gas introducing velocity in L/min, and the process gas flow rate satisfies h at 20-60 min. Exemplarily, if the total volume of the kiln is 100 L, the flow rate is 1.667-5.000 L/min; and if the total volume of the kiln is 1200 L, the flow rate is 20-60 L/min.

More preferably, during the first carbon element vapor deposition, when the carbon-containing process gas is the compound of methane and propylene, propylene is introduced at a position between a kiln opening position of the rotary kiln and 1/5 of the entire kiln length (i.e. a position close to the kiln opening) and methane is introduced at a position between 1/3 and 2/3 of the entire kiln length of the rotary kiln (i.e. the middle of the rotary kiln). It is well known to those skilled in the art how to introduce the carbon-containing process gas at different positions of the rotary kiln, for instance, gas introducing pipes of different lengths can be used, or gas introducing pipes can be provided at different positions of the rotary kiln. The inventors have found that propylene carbon-containing process gas is introduced at the position close to the kiln opening and methane carbon-containing process gas is introduced at the middle of the rotary kiln, which is more conducive to the compactness and uniformity of the carbon coating layer. The carbon-forming process of chemical vapor deposition is closely related to the carbon-hydrogen ratio of carbon source gas, when the carbon-hydrogen ratio is large, layered deposition is easy to occur, while when the carbon-hydrogen ratio is small, an isotropic carbon structure is easy to deposit. In addition to this, the content of polycyclic aromatic hydrocarbons, a by-product of carbon source gas deposition, also changes with adjustment of the carbon-hydrogen ratio, and the higher the content of the by-product, the easier it is to form carbon blocks and cause particle agglomeration. Therefore, the carbon source gas ratio as well as the concentration in the process is important. In the present invention, after secondary carbon coating, defects and weak locations that are not coated or not tightly coated can be fully supplemented, but the flow rate of the process gas during the second coating needs to be controlled to be lower than the flow rate during the first coating. The gas of the protective atmosphere is nitrogen or argon, and the protective atmosphere can be introduced into the rotary kiln alone or pre-mixed with the carbon-containing gas to be introduced into the rotary kiln. A volume ratio of protective gas and the carbon-containing gas is (1-3):(1-3).

Preferably, in the step (2), the number of revolutions of the rotary kiln is 0.1-2 rpm (e.g. 0.2 rpm, 0.5 rpm, 0.8 rpm, 1.2 rpm, 1.5 rpm, 1.8 rpm, etc.). The number of revolutions of the rotary kiln is in the range of 0.1-2 rpm and both the completeness and the compactness of the carbon coating layer perform better.

The first carbon element vapor deposition is performed at a temperature of 600-1200°C for 0.5-10 h; or the first carbon element vapor deposition is plasma vapor deposition at 100-500°C for 0.5-10 h.

Preferably, a flow rate at which the carbon-containing process gas of the second carbon element vapor deposition is introduced is 1/4 to 4/5, preferably 1/2 to 4/5 of the flow rate of the carbon-containing process gas of the first carbon element vapor deposition.

The purpose of the second carbon element vapor deposition is to repair defects of the carbon coating layer of the first carbon element vapor deposition, achieving complete carbon layer coating, and after the first carbon element vapor deposition of core particles, the cross section of the carbon coating layer is derived from deagglomeration, and is not uniform, in the second carbon element vapor deposition, reducing the flow rate at which the carbon-containing process gas is introduced to 1/4 to 4/5 of the flow rate at which the carbon-containing process gas of the first carbon element vapor deposition can better generate a carbon layer on the cross section of the carbon coating layer in the first carbon element vapor deposition for coating.

Preferably, in the step (3), the material with the large particle size is a material having a particle size greater than 50 µm, and the crushing deagglomeration can collide and disperse agglomerated particles by means of mechanical milling or jet milling.

Preferably, in the step (4), the number of revolutions of the rotary kiln is 0.1-2 rpm (e.g. 0.2 rpm, 0.5 rpm, 0.8 rpm, 1.2 rpm, 1.5 rpm, 1.8 rpm, etc.). It should be noted that the number of revolutions of the rotary kiln in the step (2) and the step (4) is each independently selected from the range of 0.1-2 rpm, preferably the number of revolutions of the rotary kiln in the step (2) is 2 to 3 times the number of revolutions of the rotary kiln in the step (4).

Preferably, the second carbon element vapor deposition is performed at a temperature of 600-1200°C for 0.5-10 h; or the second carbon element vapor deposition is plasma vapor deposition at 100-500°C for 0.5-10 h. As a preferred technical solution, according to the preparation method for the carbon coated composite according to the present invention, the process gas for the first carbon element vapor deposition and the process gas for the second carbon element vapor deposition are each independently selected from propylene and methane.

A third purpose of the present invention is to provide use of a carbon coated composite, wherein the carbon coated composite is used as any one of electrode materials for lithium batteries, sodium batteries, potassium batteries and the like.

Compared with the prior art, the present application has the following beneficial effects:
(1) the present application provides the carbon coated composite having suitable compactness (the density of the carbon coating layer is 1.0 g·cm-3 or above), and high completeness (the dissolution amount of the core characteristic element is 100 ppm or less), the core material can be coated with the carbon coating layer, and the shell of the carbon material can mitigate the volume change of the core material; in addition to this, a complete uniform carbon layer can effectively disperse surface charges to form a more stable electric double layer structure, forming a more uniform and stable interface during lithium intercalation.
(2) In an optional technical solution, the core material of the carbon coated composite is silicon monoxide, which can improve the electrical conductivity and solid electrolyte interface (SEI) film stability of the material, especially the dense carbon layer has a better effect in buffering volume changes, and the continuous dense carbon layer protection can improve high temperature performance and cycling performance.
(3) The present application also provides the preparation method for the carbon coated composite having suitable compactness and high coating completeness, and the preparation method has simple process and can achieve mass production.
(4) In the present invention, twice coating is provided, with different coating gases and different gas flow rates, and the resulting carbon coated composite is more dense and uniform in coating and has better electrochemical performance as electrode materials. Preferably, in the present invention, the degree of uniformity and compactness of the carbon coating are further improved by means of a mixed carbon-containing process gas of propylene and methane, and providing different introducing locations during the first carbon coating.

### BRIEF DESCRIPTION OF THE DRAWINGS

Fig. 1 shows an SEM image of a carbon coated composite prepared in Example 1;
Fig. 2 shows a TEM image of the carbon coated composite prepared in Example 1;
Fig. 3 shows an SEM image of a carbon coated composite prepared in Example 3;
Fig. 4 shows an SEM image of a carbon coated composite prepared in Example 4;
Fig. 5 shows a TEM image of a carbon coated composite prepared in Comparative example 1;
Fig. 6 is a schematic diagram of gas inlet and feed inlet in a rotary kiln in Example 29; and
Fig. 7 is a TEM image of a carbon coated composite obtained in Example 29.

### DETAILED DESCRIPTION

Hereinafter, the technical solution of the present invention will be described in further detail with reference to specific examples. The following examples merely illustrate and explain the present invention and are not to be construed as limiting the protection scope of the present invention. All technologies realized based on the above contents of the present invention are covered in the scope of protection of the present invention.

The test methods described in the following examples are conventional methods unless otherwise specified; and the reagents and materials can be commercially obtained unless otherwise specified.

### Example 1

A preparation method for carbon coated silicon monoxide included the following steps that:
(1) 500 kg of silicon monoxide was treated by jet milling to a D50 of 5 µm, (D90-D10)/D50 of 1.0, a specific surface area of 1.1 m3·g-1 and A/V (a ratio of the specific surface area to a bulk pore volume) of 0.8 cm-1 to obtain a feedstock to be coated;
(2) the feedstock to be coated was fed into a high temperature rotary kiln with the number of revolutions of 0.5 rpm at a feeding rate of 5 kg/h, the total volume of the kiln being 1200 L, and the temperature in the kiln being 850°C, nitrogen gas at 50 L/min and propylene gas at 50 L/min were continuously introduced in the rotary kiln at a position close to a burner (approximately 1/10 of the total length of the rotary kiln from the burner), and after 3h of revolution of the material in the kiln, the first carbon element vapor deposition was completed to obtain a first intermediate product;
(3) the first intermediate product in the step (2) was sieved with a minimum sieve of 325-mesh, and the sieved material was deagglomerated by means of mechanical deagglomeration to obtain a second intermediate product having a D50 of 5.1 µm;
(4) the material in the step (3) was fed into a high temperature rotary kiln with the number of revolutions of 1.5 rpm at a rate of 5 kg/h, the temperature in the kiln being 850°C, nitrogen gas at 50 L/min and propylene process gas at 25 L/min were continuously introduced in the rotary kiln at a position close to the burner (approximately 1/10 of the total length of the rotary kiln from the burner), and second carbon element vapor deposition was performed, the residence time of the material in the kiln being controlled to be 2h, to obtain a crude carbon coated composite with silicon monoxide as a core and an outer layer coated with carbon; and
(5) the crude carbon coated composite in the step (4) was sieved to obtain a carbon coated composite with uniform and dense carbon coating.

The carbon coated composite prepared in Example 1 has a D50 of 5.2 µm, (D90-D10)/D50 of 1.1, a specific surface area of 1.3 m3·g-1, and A/V (a ratio of the specific surface area to a bulk pore volume) of 1.09 cm-1.

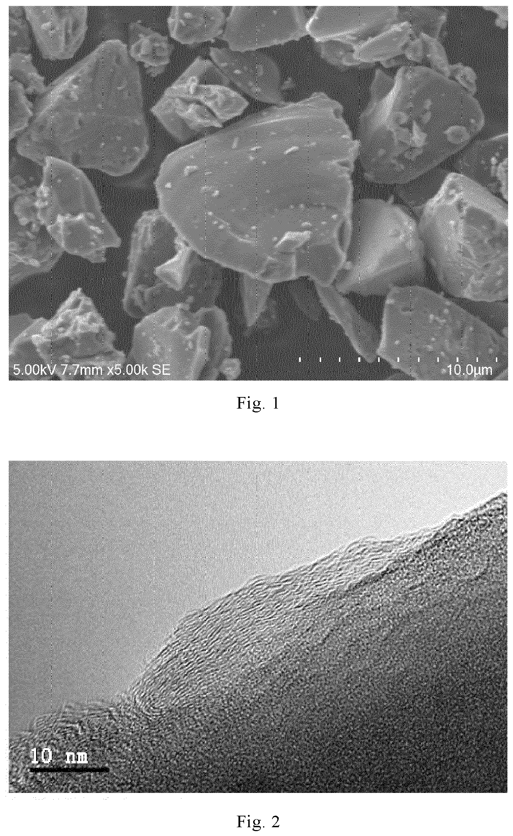

Fig. 1 shows an SEM image of the carbon coated composite prepared in Example 1. Fig. 2 shows a TEM image of the carbon coated composite prepared in Example 1. It can be seen that the carbon coated composite prepared in Example 1 has significant lattice fringes on the surface, and a complete carbon coating layer.

### Example 2

A preparation method for carbon coated tin oxide differs from Example 1 only in that 500 kg of silicon monoxide was replaced by 500 kg of tin oxide in equal mass. And in the step (1), 500 kg of tin oxide was treated by jet milling to a D50 of 4.9 µm, (D90-D10)/D50 of 1.0, a specific surface area of 1.2 m3·g-1, and A/V (a ratio of the specific surface area to a bulk pore volume) of 1.0 cm-1 to obtain a feedstock to be coated.

The carbon coated composite prepared in Example 2 has a D50 of 5.0 µm, (D90-D10)/D50 of 1.2, a specific surface area of 1.4 m3·g-1, and A/V (a ratio of the specific surface area to a bulk pore volume) of 1.17 cm-1.

### Example 3

A preparation method for carbon coated silicon differs from Example 1 only in that 500 kg of silicon monoxide was replaced by 500 kg of silicon in equal mass. And in the step (1), 500 kg of silicon was treated by jet milling to a D50 of 5.3 µm, (D90-D10)/D50 of 1.0, a specific surface area of 1.3 m3·g-1 and A/V (a ratio of the specific surface area to a bulk pore volume) of 1.15 cm-1 to obtain a feedstock to be coated.

The carbon coated composite prepared in Example 3 has a D50 of 5.5 µm, (D90-D10)/D50 of 1.0, a specific surface area of 1.5 m3·g-1, and A/V (a ratio of the specific surface area to a bulk pore volume) of 1.39 cm-1.

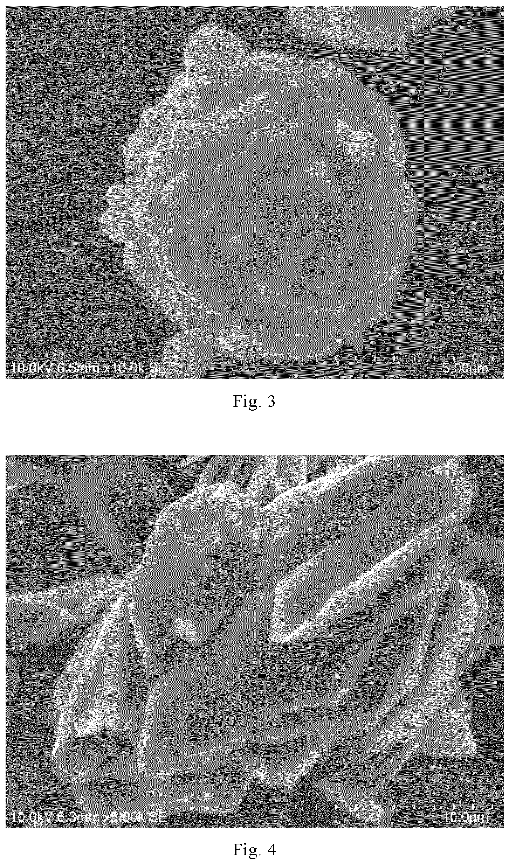

Fig. 3 shows an SEM image of the carbon coated composite prepared in Example 3 and it can be seen that a carbon coated silicon material was prepared in Example 3.

### Example 4

A preparation method for carbon coated graphite differs from Example 1 only in that 500 kg of silicon monoxide was replaced by 500 kg of natural graphite in equal mass. And in the step (1), 500 kg of natural graphite was treated by jet milling to a D50 of 4.9 µm, (D90-D10)/D50 of 1.0, a specific surface area of 1.3 m3 g-1 and A/V (a ratio of the specific surface area to a bulk pore volume) of 1.25 cm-1 to obtain a feedstock to be coated.

The carbon coated composite prepared in Example 4 has a D50 of 5 µm, (D90-D10)/D50 of 1.0, a specific surface area of 1.6 m3·g-1, and A/V (a ratio of the specific surface area to a bulk pore volume) of 1.49 cm-1.

Fig. 4 shows an SEM image of the carbon coated composite prepared in Example 4 and it can be seen that a carbon coated graphite material was prepared in Example 4.

### Example 5

A preparation method for carbon coated silicon oxide differs from Example 1 only in that 500 kg of silicon monoxide was replaced by 500 kg of silicon oxide in equal mass. And in the step (1), 500 kg of silicon oxide was treated by jet milling to a D50 of 4.9 µm, (D90-D10)/D50 of 1.0, a specific surface area of 1.3 m3·g-1, and A/V (a ratio of the specific surface area to a bulk pore volume) of 1.25 cm-1 to obtain a feedstock to be coated.

The carbon coated composite prepared in Example 5 has a D50 of 5 µm, (D90-D10)/D50 of 1.0, a specific surface area of 1.3 m3·g-1, and A/V (a ratio of the specific surface area to a bulk pore volume) of 1.1 cm-1.

### Example 6

A preparation method for carbon coated magnesium-doped silicon monoxide differs from Example 1 only in that 500 kg of silicon monoxide was replaced by 500 kg of magnesium-doped silicon monoxide in equal mass. And in the step (1), 500 kg of magnesium-doped silicon monoxide was treated by jet milling to a D50 of 5.2 µm, (D90-D10)/D50 of 1.0, a specific surface area of 1.5 m3 g-1 and A/V (a ratio of the specific surface area to a bulk pore volume) of 1.28 cm-1 to obtain a feedstock to be coated.

The carbon coated composite prepared in Example 6 has a D50 of 5.5 µm, (D90-D10)/D50 of 1.1, a specific surface area of 1.8 m3·g-1, and A/V (a ratio of the specific surface area to a bulk pore volume) of 1.51 cm-1.

### Example 7

A preparation method for carbon coated lithium-doped silicon monoxide differs from Example 1 only in that 500 kg of silicon monoxide was replaced by 500 kg of lithium-doped silicon monoxide in equal mass. And in the step (1), 500 kg of lithium-doped silicon monoxide was treated by jet milling to a D50 of 5.2 µm, (D90-D10)/D50 of 1.0, a specific surface area of 1.4 m3·g-1 and A/V (a ratio of the specific surface area to a bulk pore volume) of 1.24 cm-1 to obtain a feedstock to be coated.

The carbon coated composite prepared in Example 7 has a D50 of 5.4 µm, (D90-D10)/D50 of 1.1, a specific surface area of 1.6 m3·g-1, and A/V (a ratio of the specific surface area to a bulk pore volume) of 1.49 cm-1.

The carbon coated composites provided in Examples 1-7 were subjected to the following tests:
(1) carbon content: the carbon content of the carbon coated composite was determined by a LECO carbon sulfur meter, and was denoted as A;
(2) carbon layer density: a determination method was as follows: the true density ρ1 of the carbon coated composite was determined with a JWGB true density meter, the mass being m1; a material to be coated (a core) has a mass of m3 and a density of ρ3; the mass of the carbon coating layer was m2=m1×A if the carbon content (A) of the carbon coated composite was determined by the carbon sulfur meter according to (1); and then ρ2 was calculated according to ρ2=m2ρ1ρ3/(m1ρ3-m3ρ1); and
(3) core element dissolution amount: a determination method was to determine the content of the core element in the solution to be X1 by placing the carbon coated composite in an excess solution capable of dissolving the core characteristic element for standing for 48 h.

The test results are shown in Table 1.

**Table 1 Test results of materials in Examples 1-7**

| Example | Core material | Core characteristic element | Solution capable of dissolving core characteristic element | Carbon content/ % | Carbon layer density/g cm-3 | Dissolution amount of core characteristic element/ppm |
|---|---|---|---|---|---|---|
| Example 1 | Silicon monoxide | Silicon | Sodium hydroxide | 4.1 | 1.43 | 43 |
| Example 2 | Tin oxide | Tin | Aqua regia | 3.7 | 1.36 | 68 |
| Example 3 | Silicon | Silicon | Hydrofluoric acid | 3.3 | 1.38 | 53 |
| Example 4 | Natural graphite | Iron | Aqua regia | 3.4 | 1.30 | 13 |
| Example 5 | Silicon nitride | Silicon | Hydrofluoric acid | 3.9 | 1.31 | 57 |
| Example 6 | Magnesium doping modified silicon monoxide | Silicon | Sodium hydroxide | 4.2 | 1.32 | 50 |
| Example 7 | Lithium doping modified silicon monoxide | Silicon | Sodium hydroxide | 4.5 | 1.41 | 89 |

As can be seen from Table 1, when propylene was selected as the carbon-containing process gas, introducing propylene at 50 L/min during the first carbon element vapor deposition and introducing propylene at 25 L/min during the second carbon element vapor deposition at 850°C enabled the density of the carbon layer to be controlled to be 1.30 g·cm-3 or above regardless of the inorganic particles of the core; especially for silicon monoxide, the density of the carbon layer can be controlled to be 1.40 g·cm-3 or above.

### Examples 8-11

The difference from Example 1 was only that the temperature of the first carbon element vapor deposition and the temperature of the second vapor deposition were 830°C (Example 8), 920°C (Example 9), 800°C (Example 10), and 1000°C (Example 11).

A carbon coated composite prepared in Example 8 has a D50 of 5.1 µm, (D90-D10)/D50 of 1.1, a specific surface area of 1.3 m3·g-1, and A/V (a ratio of the specific surface area to a bulk pore volume) of 1.03 cm-1; a carbon coated composite prepared in Example 9 has a D50 of 5.2 µm, (D90-D10)/D50 of 1.1, a specific surface area of 1.4 m3 ·g-1, and A/V (a ratio of the specific surface area to a bulk pore volume) of 1.19 cm-1; a carbon coated composite prepared in Example 10 has a D50 of 5 µm, (D90-D10)/D50 of 1.1, a specific surface area of 1.3 m3·g-1, and A/V (a ratio of the specific surface area to a bulk pore volume) of 1.27 cm-1; and a carbon coated composite prepared in Example 11 has a D50 of 5.3 µm, (D90-D10)/D50 of 1.1, a specific surface area of 1.5 m3·g-1, and A/V (a ratio of the specific surface area to a bulk pore volume) of 1.49 cm-1.

### Examples 12-15

The difference from Example 1 was only that the flow rate of propylene process gas of the second vapor deposition was 13 L/min (Example 12), 40 L/min (Example 13), 50 L/min (Example 14), and 7 L/min (Example 15).

A carbon coated composite prepared in Example 12 has a D50 of 5.1 µm, (D90-D10)/D50 of 1.1, a specific surface area of 1.3 m3 ·g-1, and A/V (a ratio of the specific surface area to a bulk pore volume) of 1.27 cm-1; a carbon coated composite prepared in Example 13 has a D50 of 5.6 µm, (D90-D10)/D50 of 1.1, a specific surface area of 1.4 m3·g-1, and A/V (a ratio of the specific surface area to a bulk pore volume) of 1.29 cm-1; a carbon coated composite prepared in Example 14 has a D50 of 6.4 µm, (D90-D10)/D50 of 1.1, a specific surface area of 1.7 m3 ·g-1, and A/V (a ratio of the specific surface area to a bulk pore volume) of 1.68 cm-1; and a carbon coated composite prepared in Example 15 has a D50 of 5.3 µm, (D90-D10)/D50 of 1.1, a specific surface area of 1.6 m3·g-1, and A/V (a ratio of the specific surface area to a bulk pore volume) of 1.55 cm-1.

### Example 16

The difference from Example 1 was only that the speed of revolution of the high temperature rotary kiln in both the step (2) and the step (4) was 0.5 rpm.

### Example 17

The difference from Example 1 was only that the speed of revolution of the high temperature rotary kiln in both the step (2) and the step (4) was 1.5 rpm.

### Comparative example 1

A preparation method for carbon coated silicon monoxide included the following steps that:
(1) 500 kg of silicon monoxide was treated by jet milling to a D50 of 5 µm, (D90-D10)/D50 of 1.0, a specific surface area of 1.1 m3·g-1 and A/V (a ratio of the specific surface area to a bulk pore volume) of 0.8 cm-1 to obtain a feedstock to be coated;
(2) the feedstock to be coated was fed into a high temperature rotary kiln at a feeding rate of 200 kg/h, the temperature in the kiln being 850°C, nitrogen gas at 200 L/min and propylene gas at 50 L/min were continuously introduced, and after 6h of revolution of the material in the kiln, the first carbon element vapor deposition was completed to obtain a crude carbon coated composite with a carbon coated outer layer; and
(3) the crude carbon coated composite in the step (2) was sieved to obtain a carbon coated composite with carbon coating.

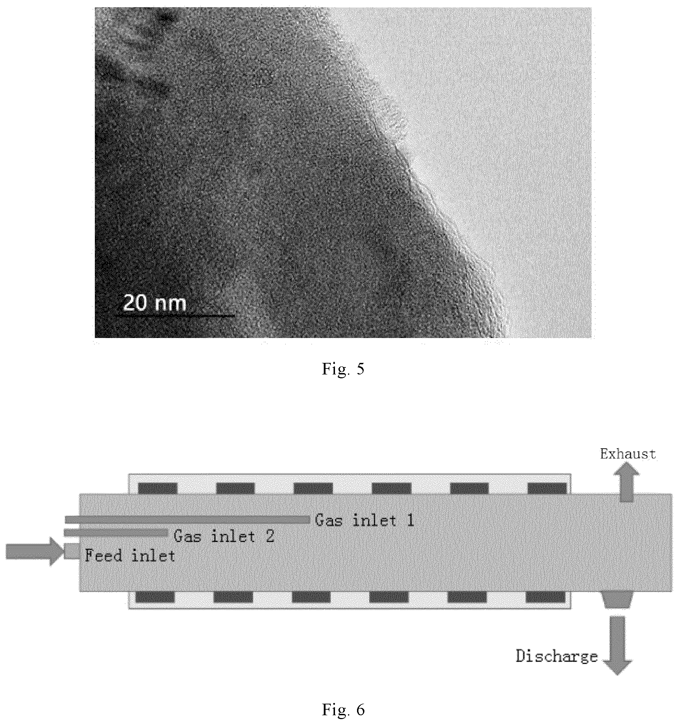

Fig. 5 shows a TEM image of the carbon coated composite prepared in Comparative example 1, and it can be seen that the surface of the carbon coated composite prepared in Comparative example 1 has a bare uncoated carbon layer, indicating that the coating of the carbon layer is incomplete.

A carbon coated composite prepared in Example 16 has a D50 of 5.6 µm, (D90-D10)/D50 of 1.0, a specific surface area of 1.3 m3·g-1, and A/V (a ratio of the specific surface area to a bulk pore volume) of 1.19 cm-1; a carbon coated composite prepared in Example 17 has a D50 of 5.3 µm, (D90-D10)/D50 of 1.0, a specific surface area of 1.4 m3·g-1, and A/V (a ratio of the specific surface area to a bulk pore volume) of 1.28 cm-1; and the resulting carbon coated silicon monoxide in Examples 8-17 was tested for the carbon layer density and the dissolution amount of silicon element according to the same test methods as those in Example 1, and Table 2 shows the results of the carbon layer density and the dissolution amount of the core characteristic element in the examples.

**Table 2 Test results of materials in Examples 8-17 and Comparative example 1**

| Example | Carbon layer density/g·cm-3 | Dissolution amount of core characteristic element/ppm |
|---|---|---|
| Example 8 | 1.38 | 55 |
| Example 9 | 1.39 | 47 |
| Example 10 | 1.35 | 95 |
| Example 11 | 1.31 | 79 |
| Example 12 | 1.40 | 55 |
| Example 13 | 1.42 | 58 |
| Example 14 | 1.41 | 68 |
| Example 15 | 1.39 | 100 |
| Example 16 | 1.34 | 90 |
| Example 17 | 1.36 | 99 |
| Comparative example 1 | 1.34 | 290 |

As can be seen from a comparison of Comparative example 1 and Examples, when only once carbon element vapor deposition was performed, the completeness of the carbon coating and the density of the carbon layer cannot be guaranteed even when the deposition time was extended. As can be seen from Examples 8-11, when the vapor deposition was performed at 830-920°C, the density of the carbon coating layer was 1.3 g·cm-3≤ρ2≤1.45 g·cm-3, and the dissolution rate was 60 ppm or below, and an increase in dissolution rate was caused when the temperature was too high or too low. As can be seen from Examples 12-15, when the gas flow rate of secondary coating was 1/4 to 4/5 of the gas flow rate of the primary coating, the density of the carbon coating layer was 1.4 g·cm-3≤ρ2≤1.45 g·cm-3 and the characteristic element dissolution rate was 60 ppm or below; when the gas flow rate of the secondary coating was too low and the completeness of the carbon coating layer was reduced, the dissolution rate was increased but can also be guaranteed to be100 ppm or below; and when the gas flow rate of the secondary coating was too high, the dissolution rate was reduced, but the reduction was not significant.

When propylene was selected as the carbon-containing process gas, introducing propylene at 50 L/min during the first carbon element vapor deposition and introducing propylene at 25 L/min during the second carbon element vapor deposition at 830-920°C by using a 1200 L rotary kiln as an example, the speed of revolution being 0.5-1.5 rpm, enable the density of the carbon layer to be controlled to be 1.38-1.43 g·cm-3 or above with core element dissolution less than 100 ppm.

### Example 18

The difference from Example 1 was only that the carbon-containing process gas of the first carbon element vapor deposition was methane, and the temperature was adaptively adjusted, specifically:
the step (2) was adjusted as follows: the feedstock to be coated was fed into the high temperature rotary kiln at a feeding rate of 5 kg/h, the temperature in the kiln being 1000°C, nitrogen gas at 50 L/min and methane gas at 50 L/min were continuously introduced, and after 3h of revolution of the material in the kiln, the first carbon element vapor deposition was completed to obtain a first intermediate product.

A carbon coated composite prepared in Example 18 has a D50 of 5.3 µm, (D90-D10)/D50 of 1.1, a specific surface area of 4.5 m·g-1, and A/V (a ratio of the specific surface area to a bulk pore volume) of 3.78 cm-1. Because methane was used as the process gas, disordered carbon coating was formed, the specific surface area was greatly increased.

### Example 19

The difference from Example 1 was only that the carbon-containing process gas of the second carbon element vapor deposition was methane, and the temperature was adaptively adjusted, specifically:
the step (4) was adjusted as follows: the temperature in the kiln was 1000°C.

The material in the step (3) was fed into a high temperature rotary kiln with the number of revolutions of 1.5rpm at 5 kg/h, the temperature in the kiln being 1000°C, nitrogen at 50 L/min and methane at 25 L/min were continuously introduced, and second carbon element vapor deposition was performed, the residence time of the material in the kiln being controlled to be 2h, to obtain a crude carbon coated composite with silicon monoxide as a core and an outer layer coated with carbon.

A carbon coated composite prepared in Example 19 has a D50 of 5.3 µm, (D90-D10)/D50 of 1.1, a specific surface area of 3.5 m3·g-1, and A/V (a ratio of the specific surface area to a bulk pore volume) of 2.94 cm-1.

### Example 20

The difference from Example 1 was only that the carbon-containing process gas for both the first carbon element vapor deposition and the second carbon element vapor deposition was methane, and the temperature was adaptively adjusted, specifically:
the step (2) was adjusted as follows: the feedstock to be coated was fed into the high temperature rotary kiln with the number of revolutions of 0.5 rpm at a feeding rate of 5 kg/h, the temperature in the kiln being 1000°C, nitrogen at 50 L/min and methane at 50 L/min were continuously introduced, and after 3h of revolution of the material in the kiln, the first carbon element vapor deposition was completed to obtain a first intermediate product; and
the step (4) was adjusted as follows: the material in the step (3) was fed into a high temperature rotary kiln with the number of revolutions of 1.5rpm at a rate of 5 kg/h, the temperature in the kiln being 1000°C, nitrogen at 50 L/min and methane at 25 L/min were continuously introduced, and second carbon element vapor deposition was performed, the residence time of the material in the kiln being controlled to be 2h, to obtain a crude carbon coated composite with silicon monoxide as a core and an outer layer coated with carbon; and
the carbon coated composite prepared in Example 20 has a D50 of 5.4 µm, (D90-D10)/D50 of 1.1, a specific surface area of 5.5 m3·g-1, and A/V (a ratio of the specific surface area to a bulk pore volume) of 4.62 cm-1.

### Example 21

The difference from Example 1 was only that the carbon-containing process gas of the first carbon element vapor deposition was acetylene, the temperature was adaptively adjusted, specifically:
the step (2) was adjusted as follows: the feedstock to be coated was fed into the high temperature rotary kiln with the number of revolutions of 0.5 rpm at a feeding rate of 5 kg/h, the temperature in the kiln being 900°C, nitrogen gas at 50 L/min and acetylene gas at 50 L/min were continuously introduced, and after 3h of revolution of the material in the kiln, the first carbon element vapor deposition was completed to obtain a first intermediate product.

A carbon coated composite prepared in Example 21 has a D50 of 5.1 µm, (D90-D10)/D50 of 1.1, a specific surface area of 1.5 m3·g-1, and A/V (a ratio of the specific surface area to a bulk pore volume) of 1.38 cm-1.

### Example 22

The difference from Example 1 was only that the carbon-containing process gas of the second carbon element vapor deposition was acetylene, and the temperature was adaptively adjusted, specifically:
the step (4) was adjusted as follows: the material in the step (3) was fed into a high temperature rotary kiln with the number of revolutions of 1.5rpm at a rate of 5 kg/h, the temperature in the kiln being 900°C, nitrogen gas at 50 L/min and acetylene gas at 25 L/min were continuously introduced, and second carbon element vapor deposition was performed, the residence time of the material in the kiln being controlled to be 2h, to obtain a crude carbon coated composite with silicon monoxide as a core and an outer layer coated with carbon.

The carbon coated composite prepared in Example 22 has a D50 of 5.2 µm, (D90-D10)/D50 of 1.1, a specific surface area of 1.6 m3·g-1, and A/V (a ratio of the specific surface area to a bulk pore volume) of 1.51 cm-1.

### Example 23

The difference from Example 1 was only that the carbon-containing process gas for both the first carbon element vapor deposition and the second carbon element vapor deposition was acetylene, and the temperature was adaptively adjusted, specifically:
the step (2) was adjusted as follows: the feedstock to be coated was fed into the high temperature rotary kiln with the number of revolutions of 0.5 rpm at a feeding rate of 5 kg/h, the temperature in the kiln being 900°C, nitrogen gas at 50 L/min and acetylene gas at 50 L/min were continuously introduced, and after 3h of revolution of the material in the kiln, the first carbon element vapor deposition was completed to obtain a first intermediate product.

The step (4) was adjusted as follows: the material in the step (3) was fed into a high temperature rotary kiln with the number of revolutions of 1.5rpm at a rate of 5 kg/h, the temperature in the kiln being 900°C, nitrogen gas at 50 L/min and acetylene gas at 25 L/min were continuously introduced, and second carbon element vapor deposition was performed, the residence time of the material in the kiln being controlled to be 2h, to obtain a crude carbon coated composite with silicon monoxide as a core and an outer layer coated with carbon.

The carbon coated composite prepared in Example 23 has a D50 of 5.5 µm, (D90-D10)/D50 of 1.1, a specific surface area of 1.7 m3·g-1, and A/V (a ratio of the specific surface area to a bulk pore volume) of 1.67 cm-1.

Tests of the carbon layer density and the dissolution of the core characteristic element were performed for the above examples, the test methods were as described in Example 1, and Table 3 shows the test results for the above examples.

**Table 3 Test results of materials in Examples 18-23**

| Example | Carbon layer density/g·cm-3 | Core element dissolution amount/ppm |
|---|---|---|
| Example 18 | 1.41 | 42 |
| Example 19 | 1.42 | 45 |
| Example 20 | 1.43 | 40 |
| Example 21 | 1.23 | 78 |
| Example 22 | 1.25 | 89 |
| Example 23 | 1.21 | 80 |

As can be seen from Table 3, for methane and acetylene, after the first carbon element vapor deposition, deagglomeration was performed, and then the second carbon element vapor deposition was performed to improve the density of the carbon layer and the uniformity of carbon coating; of course, for other carbon-containing process gases, after the first carbon element vapor deposition, deagglomeration was performed, and then the second carbon element vapor deposition was performed to improve the density of the carbon layer and the uniformity of carbon coating.

### Example 24

The difference from Example 1 was only that the feedstock to be coated was replaced to be have a D50 of 5 µm, (D90-D10)/D50 of 1.2, a specific surface area of 1.5 m3·g-1, and A/V (a ratio of the specific surface area to a bulk pore volume) of 1.1 cm-1, specifically:
(1) 500 kg of silicon monoxide was treated by jet milling to a D50 of 5 µm, (D90-D10)/D50 of 1.2, a specific surface area of 1.5 m3·g-1, and A/V (a ratio of the specific surface area to a bulk pore volume) of 1.1 cm-1 to obtain a feedstock to be coated.

The carbon coated composite prepared in Example 24 has a D50 of 5.3 µm, (D90-D10)/D50 of 1.2, a specific surface area of 1.6m3·g-1, and A/V (a ratio of the specific surface area to a bulk pore volume) of 1.58 cm-1.

### Example 25

The difference from Example 1 was only that the step (1) was as follows: 500 kg of silicon monoxide was treated by jet milling to a D50 of 5 µm, (D90-D10)/D50 of 1.2, a specific surface area of 2.5 m3·g-1 and A/V (a ratio of the specific surface area to a bulk pore volume) of 1.5 cm-1 to obtain a feedstock to be coated.

The carbon coated composite prepared in Example 25 has a D50 of 5.5 µm, (D90-D10)/D50 of 1.2, a specific surface area of 1.9 m3·g-1, and A/V (a ratio of the specific surface area to a bulk pore volume) of 2.44 cm-1.

### Example 26

The difference from Example 1 was only that the step (1) was as follows: 500 kg of silicon monoxide was treated by jet milling to a D50 of 10 µm, (D90-D10)/D50 of 1.0, a specific surface area of 1.1 m3·g-1 and A/V (a ratio of the specific surface area to a bulk pore volume) of 0.8 cm-1 to obtain a feedstock to be coated.

The carbon coated composite prepared in Example 26 has a D50 of 10.3 µm, (D90-D10)/D50 of 1.0, a specific surface area of 1.4 m3·g-1, and A/V (a ratio of the specific surface area to a bulk pore volume) of 1.48 cm-1.

### Example 27

(1) Example 27 differed from Example 1 only in that the step (1) was as follows: 500 kg of silicon monoxide was treated by jet milling to a D50 of 30 µm, (D90-D10)/D50 of 1.0, a specific surface area of 1.1 m3·g-1 and A/V (a ratio of the specific surface area to a bulk pore volume) of 0.8 cm-1 to obtain a feedstock to be coated.

The carbon coated composite prepared in Example 27 has a D50 of 30.5 µm, (D90-D10)/D50 of 1.1, a specific surface area of 1.3 m3·g-1, and A/V (a ratio of the specific surface area to a bulk pore volume) of 1.41 cm-1.

### Example 28

The difference from Example 1 was only that the feedstock to be coated was replaced to be have a D50 of 5 µm, (D90-D10)/D50 of 1.8, a specific surface area of 2.0 m3·g-1, and A/V (a ratio of the specific surface area to a bulk pore volume) of 0.8 cm-1.

The carbon coated composite prepared in Example 28 has a D50 of 5.5 µm, (D90-D10)/D50 of 1.9, a specific surface area of 1.4 m3·g-1, and A/V (a ratio of the specific surface area to a bulk pore volume) of 0.92 cm-1.

### Comparative example 2

The difference from Example 1 was only that the feedstock to be coated was replaced to be have a D50 of 5 µm, (D90-D10)/D50 of 1.2, a specific surface area of 1.1 m3·g-1, and A/V (a ratio of the specific surface area to a bulk pore volume) of 0.4 cm-1, specifically:
the carbon coated composite prepared in Comparative example 2 has a D50 of 5.5 µm, (D90-D10)/D50 of 1.2, a specific surface area of 1.5 m3·g-1, and A/V (a ratio of the specific surface area to a bulk pore volume) of 0.8 cm-1.

### Comparative example 3

The difference from Example 1 was only that the feedstock to be coated was replaced to be have a D50 of 2.5 µm, (D90-D10)/D50 of 0.6, a specific surface area of 5.0 m3 ·g-1, and A/V (a ratio of the specific surface area to a bulk pore volume) of 7.0 cm-1, specifically:
the carbon coated composite prepared in Comparative example 3 has a D50 of 3.1 µm, (D90-D10)/D50 of 0.7, a specific surface area of 2.5 m3·g-1, and A/V (a ratio of the specific surface area to a bulk pore volume) of 2.3 cm-1.

Tests of the carbon layer density and the dissolution of the core characteristic element were performed for the above examples and comparative examples, and Table 4 shows the test results.

**Table 4 Test results for Examples 24-28 and Comparative examples 2-3**

| Example | Carbon content/% | Carbon layer density/g·cm-3 | Core element dissolution amount/ppm |
|---|---|---|---|
| Example 24 | 4.1 | 1.43 | 43 |
| Example 25 | 4 | 1.4 | 65 |
| Example 26 | 5 | 1.38 | 51 |
| Example 27 | 3.5 | 1.35 | 69 |
| Example 28 | 3.3 | 1.37 | 88 |
| Comparative example 2 | 3.8 | 1.36 | 125 |
| Comparative example 3 | 4.9 | 1.15 | 188 |

As can be seen from Table 4, a particular feedstock (the average diameter of the feedstock to be coated is 1-40 µm, the particle size distribution span is 0.5≤(D90-D10)/D50≤2, the specific surface area is 1-50 m2·g-1, and the ratio of the specific surface area to the bulk pore volume is 0.5-5 cm-1) was used, rotary revolution was performed in the rotary kiln, and twice vapor deposition was performed on the dynamic feedstock surface to form the complete and compact (the density ρ2 of the carbon coating layer is 1.0-2.0 g·cm-3; and the core element dissolution rate is within 100 ppm) carbon coating layer.

### Example 29

Other conditions were the same as those in Example 1, except that the step (2) was changed as follows: the feedstock to be coated was fed into a high temperature rotary kiln with the number of revolutions of 0.5 rpm at a feeding rate of 5 kg/h, the total volume in the kiln being 1200 L, and the temperature in the kiln being 850°C, nitrogen gas at 50 L/min and propylene gas at 25 L/min and methane gas at 25 L/min were continuously introduced, Fig. 6 is a schematic view of gas inlet and feed inlet in a rotary kiln, wherein propylene gas was mixed with nitrogen gas to be introduced through a gas inlet 1 at a position close to a burner (approximately 1/10 of the total length of the rotary kiln from the burner) in a rotary kiln, methane gas was mixed with nitrogen gas to be introduced at a gas inlet 2 near the middle of the rotary kiln (approximately 2/5 of the total length of the rotary kiln from the burner) through a long gas introducing pipe, and after 3h of revolution of the material in the kiln, the first carbon element vapor deposition was completed to obtain a first intermediate product.

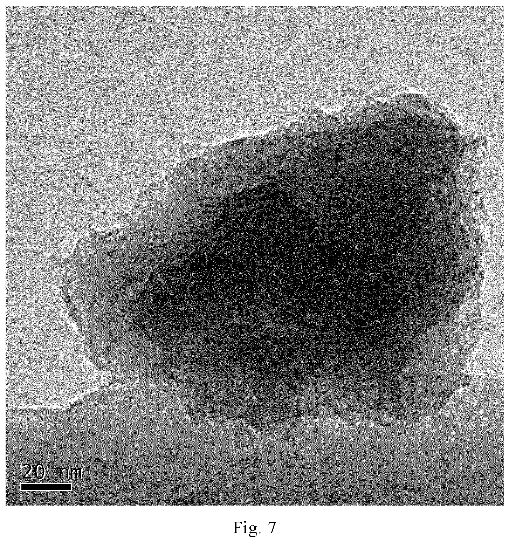

A carbon coated composite with uniform and dense carbon coating was finally obtained, and Fig. 7 is a TEM image of the carbon coated composite obtained in Example 29. The thickness and completeness of the coating of the surface carbon layer were better than those of the carbon coated composite in Example 1 by distinguishing the variation of the contrast of the core and the shell and the surface lattice fringes, and the coating was more complete. The carbon coated composite obtained in Example 29 was tested, the density of the carbon layer was 1.44 g·cm-3 and the dissolution amount of the core characteristic element silicon was 29 ppm.

### Example 30

The other conditions were the same as those in Example 29, except that both propylene gas and methane gas entered from the gas inlet 1. The carbon coated composite obtained in Example 30 was tested, the density of the carbon layer was 1.44 g·cm-3 and the dissolution amount of the core characteristic element silicon was 36 ppm. While the reason is not clear, a comparison of Example 29 and Example 30 illustrates that introducing propylene gas at the position close to the burner and introducing methane at the position close to the middle of the kiln are more favorable for forming a complete, uniform and dense carbon coating layer.

### Application example

Electrochemical performance characterization of the carbon coated composite negative electrode materials: the carbon coated composite negative electrode materials prepared in the above examples, Super P, and polyacrylic acid (a binder) were mixed in a mass ratio of 80: 10: 10 into a slurry and the slurry was uniformly applied to a copper foil current collector to obtain an electrode diaphragm. A button battery was assembled in an argon protected glove box with a metallic lithium sheet as a counter electrode, a polypropylene microporous membrane (Celgard 2400) as a separator, and 1 mol/L LiPF6 (a solvent was a mixed solution of ethylene carbonate and dimethyl carbonate with a volume ratio of 1:1, in which 5% of vinylidene fluoride carbonate and 2% of vinylene carbonate were added) as an electrolyte, and subjected to charge and discharge testing with a test procedure of 100 mA g-1 and a charge and discharge voltage interval of 0.01-1.5 V, and Table 5 is the battery test results. Wherein application examples 1-30 and Comparative application examples 1-3 respectively used the carbon coated negative electrode materials in Examples 1-30 and Comparative examples 1-3. The battery performance test results for some of the application examples are shown in Table 5 below:

**Table 5 Battery test results**

| Application example | Initial coulombic efficiency % | Capacity retention % after storage for 7 days at 60°C | Capacity retention % after 500 cycles at 0.5 C |
|---|---|---|---|
| Application example 1 | 76.0 | 97.2 | 92.4 |
| Application example 9 | 75.7 | 96.5 | 92.0 |
| Application example 14 | 75.3 | 96.3 | 91.5 |
| Application example 3 | 89.9 | 93.0 | 86.1 |
| Application example 4 | 93.8 | 98.1 | 94.5 |
| Application example 18 | 75.3 | 96.6 | 91.3 |
| Application example 19 | 76.1 | 97.8 | 92.9 |
| Application example 21 | 75.8 | 94.7 | 88.7 |
| Application example 26 | 76.2 | 98.3 | 92.6 |
| Application example 29 | 76.3 | 99.3 | 95.4 |
| Application example 30 | 76.3 | 99.0 | 94.7 |
| Comparative application example 1 | 74.9 | 80.4 | 75.4 |
| Comparative application example 2 | 74.8 | 85.3 | 82.5 |
| Comparative application example 3 | 75.6 | 88.1 | 79.3 |

## Claims

1. A carbon coated composite comprising a core material and a carbon coating layer coating the core material, **characterized in that**, the carbon coating layer has a density of 1.0-2.0 g·cm⁻³, the core material, i.e. a material to be coated with carbon has a D50 of 1-40 µm, a particle size distribution span satisfies 0.5≤(D90-D10)/D50≤2, a specific surface area is 1-5 m²·g⁻¹, and a ratio of the specific surface area to a bulk pore volume is 0.50-2.00 cm⁻¹; and the increase in D50 of the coated composite is 3 µm or less.

2. The carbon coated composite according to claim 1, **characterized in that**, the density of the carbon coating layer is 1.2 g·cm⁻³≤ρ₂≤1.5 g·cm⁻³, the material to be coated with carbon has a D50 of 3-10 µm, the particle size distribution span satisfies 1≤(D90-D10)/D50≤1.5, the specific surface area is 1-2 m²·g⁻¹, the ratio of the specific surface area to the bulk pore volume is 0.70-1.50 cm⁻¹, and the increase in D50 of the coated composite is 1 µm or less.

3. The carbon coated composite according to claim 1, **characterized in that**, the carbon coated composite is placed in an excess solution capable of dissolving a core characteristic element for dissolution determination of the core characteristic element, wherein the dissolution amount of the core characteristic element is 100 ppm or less, and the core characteristic element refers to an element of which quantitative data of inductively coupled plasma (ICP) can be obtained by a chemical reaction in the material to be coated with carbon.

4. The carbon coated composite according to claim 3, **characterized in that**, the core material is selected from any one or a combination of at least two of graphite particles, metallic tin particles, tin oxide particles, silicon particles, silicon oxide particles, silicon nitride particles, element-doped silicon-oxygen composite particles, metallic germanium particles, and germanium oxide particles; when the core material is the graphite particles, a dissolution solution is aqua regia and the core characteristic element is an iron element; when the core material is the metallic tin particles or the tin oxide particles, a dissolution solution is aqua regia and the core characteristic element is a tin element; when the core material is the metallic germanium particles or the germanium oxide particles, a dissolution solution is an aqua regia solution and the core characteristic element is a germanium element; and when the core material is the silicon particles, the silicon oxide particles, the silicon nitride particles or the element-doped silicon-oxygen composite particles, a dissolution solution is a sodium hydroxide or hydrofluoric acid solution, and the core characteristic element is silicon.

5. The carbon coated composite according to claim 4, **characterized in that**, the silicon oxide is any silicon oxide with a silicon to oxygen ratio of 1:1 to 1:2; and the element-doped silicon-oxygen composite comprises lithium-doped silicon monoxide and magnesium-doped silicon monoxide.

6. A preparation method for the carbon coated composite according to any one of claims 1 to 5, **characterized by** comprising the following steps of:
(1) treating a feedstock to be coated, i.e. a core material such that the core material has an average diameter of 1-40 µm, a particle size distribution span is 0.5≤(D90-D10)/D50≤2, a specific surface area is 1-5 m²·g⁻¹, and a ratio of the specific surface area to a bulk pore volume is 0.5-2.0 cm⁻¹;
(2) feeding the treated feedstock to be coated into a rotary kiln, introducing a carbon-containing process gas under a protective atmosphere, and performing first carbon element vapor deposition to obtain a first intermediate product;
(3) sieving the intermediate product to remove a material with a large particle size, and subjecting the remaining material to crushing deagglomeration to obtain a second intermediate product; and
(4) feeding the second intermediate product again into the rotary kiln, introducing a carbon-containing process gas under a protective atmosphere, and performing second carbon element vapor deposition to obtain a carbon coated composite with feedstock particles to be coated as a core and an outer layer coated with carbon.

7. The preparation method according to claim 6, **characterized in that**, in the steps (2) and (4), the carbon-containing process gas comprises C1-4 alkanes, C2-4 alkenes, and C2-4 alkynes; the number of revolutions of the rotary kiln is 0.1 to 2 rpm; the first carbon element vapor deposition is performed at a temperature of 600-1200°C for 0.5-10 h; or the first carbon element vapor deposition is plasma vapor deposition at 100-500°C for 0.5-10 h; the second carbon element vapor deposition is performed at a temperature of 600-1200°C for 0.5-10 h; or the second carbon element vapor deposition is plasma vapor deposition at 100-500°C for 0.5-10 h.

8. The preparation method according to claim 6, **characterized in that**, during the first carbon element vapor deposition, the carbon-containing process gas is a compound of propylene and methane in a volume ratio of (1-2):(1-2), a flow rate at which the process gas is introduced satisfies the following condition: h=V/s, wherein V is the total volume of a chamber of the rotary kiln in L; s is a gas introducing velocity in L/min, and the process gas flow rate satisfies h at 20-60 min; and a flow rate at which the carbon-containing process gas of the second carbon element vapor deposition is introduced is 1/4 to 4/5 of the flow rate of the carbon-containing process gas of the first carbon element vapor deposition.

9. The preparation method according to claim 8, **characterized in that**, propylene is introduced from a position between a kiln opening position of the rotary kiln to 1/5 of the entire kiln length, and methane is introduced from a position between 1/3 to 2/3 of the entire kiln length of the rotary kiln.

10. Use of the carbon coated composite according to any one of claims 1 to 5 as an electrode material for a lithium ion battery.
